# EUROPÄISCHE PATENTSCHRIFT

(11) **EP 2 049 310 B1**
(45) Veröffentlichungstag und Bekanntmachung des Hinweises auf die Patenterteilung: **13.01.2010**
(21) Anmeldenummer: 07819414.9
(22) Anmeldetag: 29.10.2007
(51) Int. Cl.: B25J 18/00, B25J 9/00, B25J 15/00

(54) **MOTORANTREIBBARE GELENK-GLIED-EINHEIT FÜR ROBOTERFINGER ODER ROBOTERARME UND SYSTEM HIERFÜR**
MOTORIZED JOINT-LINK UNIT FOR ROBOT FINGERS OR ROBOT ARMS AND SYSTEM FOR IT
UNITÉ MOTORISABLE ARTICULATION-MEMBRE POUR DES DOIGTS OU DES BRAS DE ROBOTS, ET SYSTÈME À CET EFFET

(30) Priorität: 27.10.2006 DE 102006052402
(43) Veröffentlichungstag der Anmeldung: 22.04.2009
(73) Patentinhaber: Schunk GmbH & Co. KG Spann- und Greiftechnik, 74348 Lauffen am Neckar (DE)
(72) Erfinder: HAAG, Matthias, 70191 Stuttgart (DE); HOCH, Andreas, 74388 Talheim (DE)
(74) Vertreter: Bulling, Alexander
(86) Internationale Anmeldenummer: PCT/EP2007/009373
(87) Internationale Veröffentlichungsnummer: WO 2008/049641

(56) Entgegenhaltungen:
- EP-A- 1 704 970
- DE-A1- 10 346 272
- US-A1- 2004 193 318

## Beschreibung

Die Erfindung betrifft eine motorantreibbare Gelenk-Glied-Einheit für Roboterfinger oder Roboterarme, mit einem eine Schwenkachse aufweisenden Gelenk, mit einem am Gelenk angeordneten Glied und mit einem Motor zum Verschwenken des Gliedes um die Schwenkachse. Ein System von mehreren, nacheinander angeordneten derartigen Gelenk-Glied-Einheiten bilden beispielsweise ein- oder mehrgliedrige Roboterfinger einer Roboterhand und/oder Roboterarme.

Aus der EP 1 645 374 A1 ist beispielsweise eine Roboterhand mit drei Roboterfingern bekannt geworden, bei welcher an Gelenken angeordnete Glieder über ansteuerbare Aktuatoren bewegt werden.

Aus der DE 103 46 272 A1 ist eine Fingereinheit für eine Roboterhand bekannt geworden, bei der ein zwischen zwei Gelenkabschnitten vorgesehener zylindrischer Hohlkörper auf die Gelenkabschnitte aufgeschoben und in radialer Richtung mittels Befestigungselementen an den Gelenkabschnitten festgesetzt ist. Dabei nehmen die Durchmesser der einzelnen Fingerglieder ausgehend von einem Betätiger über einen Fingerbasisbereich hin zum Fingerspitzenbereich ab.

Der vorliegenden Erfindung liegt die Aufgabe zugrunde, eine leistungsdichte Gelenk-Glied-Einheit bereitzustellen, die insbesondere vor äußeren Einflüssen geschützt wird, kompakt baut und sehr flexibel und vielseitig einsetzbar ist.

Diese Aufgabe wird durch eine motorantreibbare Gelenk-Glied-Einheit mit den Merkmalen des Anspruchs 1 gelöst. Die Einheit sieht folglich vor, dass das Gelenk einen ersten Gelenkabschnitt und einen mit dem ersten Gelenkabschnitt über ein Getriebe bewegungsgekoppelten, um die Schwenkachse verschwenkbaren zweiten Gelenkabschnitt aufweist, das am ersten Gelenkabschnitt der das Getriebe antreibende Motor quer zur Schwenkachse anordenbar ist und dass das Glied als wenigstens einseitig offener Hohlkörper ausgebildet ist, in dem im montierten Zustand der Motor unterbringbar ist. Durch die Möglichkeit des Unterbringens des Motors im als Hohlkörper ausgebildeten Glied beansprucht der Motor zum einen keinen zusätzlichen Bauraum und ist zum anderen vor äußeren Einflüssen geschützt untergebracht. Die Motorwelle verläuft dabei parallel zur Hohlkörperlängsachse bzw. liegt im Bereich der Hohlkörperlängsachse. Die Motorwelle endet vorteilhafterweise im Bereich des Gelenks und treibt dort das Gelenkgetriebe, über welches die Gelenkabschnitte um die Schwenkachse zueinander bewegt werden, an. Als Gelenkgetriebe kann insbesondere ein Getriebe, wie es in der DE 10 2005 042 716 beschrieben ist, Verwendung finden.

Zur Anordnung des Hohlkörpers am ersten Gelenkabschnitt weist der erste Gelenkabschnitt auf der der Schwenkachse abgewandten Seite einen in radialer Richtung den Motor überragenden Flanschabschnitt auf. Vorteilhafterweise kann der Hohlkörper mit der entsprechenden Stirnseite auf den Flanschabschnitt aufgesetzt werden. Um eine gute Dichtwirkung zu erzielen, kann vorgesehen sein, dass zwischen dem Hohlkörper und dem Flanschabschnitt ein Dichtelement, beispielsweise ein Dichtring, angeordnet ist. Durch Vorsehen eines solchen Flanschabschnittes kann vorteilhafterweise ein dichtes Anordnen des Hohlkörpers am ersten Gelenkabschnitt realisiert werden, so dass kein Staub oder Feuchtigkeit in den Hohlkörper eindringen kann. Die Motorwelle eines am Flanschabschnitt angeordneten Motors durchgreift vorzugsweise den Flanschabschnitt und ist mit einer Eingangswelle des Getriebes drehgekoppelt. Vorzugsweise liegt die Achse der Motorwelle in der Mittellängsachse des Hohlkörpers oder verläuft parallel dazu.

Dokument EP-A-1 704 970 offenbart eine motorantreibbare Gelenk-Glied-Einheit für Roboterfinger gemäß dem Oberbegriff von Anspruch 1.

Gemäß der Erfindung ist weiterhin vorteilhaft, dass der zweite Gelenkabschnitt auf der der Schwenkachse abgewandten Seite einen Flanschabschnitt zur Anordnung eines weiteren Bauelements aufweist.

Das weitere Bauelement kann dabei insbesondere ein Grundkörper, beispielsweise ein Handgrundkörper, sein. Das Gelenk samt als Hohlkörper ausgebildetem Glied kann dann über den Flanschabschnitt des zweiten Gelenkabschnitts an dem Grundkörper befestigt sein. Ferner ist denkbar, dass das weitere Bauelement als Endkörper, beispielsweise als Fingerkuppe eines Roboterfingers, ausgebildet ist. Das weitere Bauelement kann auch als dem Hohlkörper entsprechender weiterer Hohlkörper ausgebildet sein. Das Gelenk ist dann zwischen zwei Gliedern, bzw. die Glieder bildenden Hohlkörpern, angeordnet. Ferner ist denkbar, dass das weitere Bauelement einen dem ersten oder zweiten Gelenkabschnitt entsprechender weiterer Gelenkabschnitt eines weiteren Gelenks ist. In diesem Fall sind dann folglich zwei Gelenke unmittelbar benachbart aneinander angeordnet.

Vorteilhafterweise entspricht die Ausbildung des Flanschabschnittes des ersten Gelenkabschnitts wenigstens weitgehend der Ausbildung des Flanschabschnittes des zweiten Gelenkabschnitts. Hierdurch wird eine sehr hohe Flexibilität bei den verschiedenen möglichen Anordnungen von Bauelementen an den Gelenkabschnitten ermöglicht.

Ferner kann vorgesehen sein, dass die Flanschabschnitte der beiden Gelenkabschnitte jeweils eine senkrecht zur Mittellängsachse verlaufende Anlagefläche zur Anlage der Stirnseite des Hohlkörpers aufweisen. Derartige Anlageflächen bilden eine definierten Anschlag für den jeweiligen Hohlkörper.

Zudem ist denkbar, dass die am zweiten Gelenkabschnitt vorgesehene Anlagefläche einen in axialer Richtung überstehenden gelenkabschnittseitigen Bereich begrenzt. Hierdurch kann eine zentriertes Anordnen des Hohlkörpers am jeweiligen Gelenkabschnitt erreicht werden. Der überstehende, gelenkabschnittseitigen Bereich kann dabei zylindrisch und insbesondere kreiszylindrisch ausgebildet sein.

Eine weitere Ausbildung der Erfindung sieht vor, dass der Abstand der Anlagefläche des ersten Gelenkabschnitts zur Schwenkachse gleich ist wie der Abstand der Anlagefläche des zweiten Gelenkabschnitts zur Schwenkachse. Durch einen solchen symmetrischen Aufbau können einzelne Bauteile auf einfache Art und Weise miteinander kombiniert werden, wobei jeweils definierte Abstände zur Schwenkachse eingehalten werden können.

Vorteilhaft ist zudem, wenn die dem Gelenk abgewandte Seite des Hohlkörpers wenigstens weitgehend gleich wie die dem Gelenk zugewandte Seite des Hohlkörpers ausgebildet ist. Hierdurch können an einem Hohlkörper beispielsweise zwei identische Gelenke angeordnet sein. Insofern ergibt sich auch hierdurch eine erhöhte Gestaltungsfreiheit bei der Anordnung von Hohlkörpern an Gelenken.

Der Hohlkörper als solcher ist vorteilhafterweise als Hohlprofil ausgebildet. Das Hohlprofil kann dabei wenigstens weitgehend zylindrisch ausgebildet sein. Die Flanschabschnitte können in radialer Richtung bündig mit dem Hohlkörper abschließen. Dadurch ergibt sich eine absatzfreier Übergangsbereich zwischen dem Gelenk und dem Glied.

Zur elektrischen Versorgung und/oder Ansteuerung des Motors sind vorteilhafterweise im Hohlkörper elektrische Verbindungsmittel angeordnet. Dadurch, dass die elektrischen Verbindungsmittel innerhalb des Hohlkörpers, insbesondere auch innerhalb des Gelenks, verlaufen, sind diese vor äußeren Einflüssen geschützt angeordnet.

Der Hohlkörper kann gemäß einer weiteren Ausbildung der Erfindung sich in Längsrichtung erstreckende Zugankeraufnahmen für den Hohlkörper gegen den Gelenkabschnitt beaufschlagende Zuganker aufweisen. Mit derartigen Zugankern kann folglich der Hohlkörper auf einfache und dennoch geeignete Art und Weise am entsprechenden Gelenkabschnitt angeordnet werden.

Die Zugankeraufnahmen erstrecken sich dabei vorteilhafterweise über die gesamte Länge des Hohlkörpers, wobei im montierten Zustand die Zuganker zum einen den ersten Gelenkabschnitt gegen die dem Gelenk zugewandte Stirnseite des Hohlkörpers und zum anderen das weitere Bauteil gegen die andere Stirnseite des Hohlkörpers beaufschlagen. Eine derartige Anordnung hat den Vorteil, dass die Zuganker zum einen in den Zugankeraufnahmen geschützt angeordnet sind. Zum anderen sind am Hohlkörper keine Befestigungsmittel für die Zuganker vorzusehen, da diese vorteilhafterweise zum einen am ersten Gelenkabschnitt und zum anderen am weiteren Bauelement angreifen.

Dabei ist vorteilhaft, wenn die freien Enden der Zuganker am ersten Gelenkabschnitt oder am weiteren Bauelement fest verankert sind und über am weiteren Bauelement oder am ersten Gelenkabschnitt vorgesehene Spannmittel in Längsrichtung vorspannbar sind. Als Spannmittel können beispielsweise ein auf den Zugankern vorgesehener Gewindeabschnitt mit zugehöriger Spannmutter Verwendung finden.

Vorteilhaft ist allerdings, wenn die Spannmittel am weiteren Bauelement oder am Gelenkabschnitt um eine quer zur Längsachse der Zuganker verlaufende Drehachse verdrehbar angeordnete Spannelemente umfassen, die an den Zugankern vorgesehene Spannköpfe derart hintergreifen, dass beim Verdrehen der Spannelemente die Zuganker über spannelementseitige Führungsschrägen in Längsrichtung gespannt werden. Eine derartige Anordnung hat den Vorteil, dass in Längsrichtung hierfür nur sehr wenig Bauraum zur Verfügung gestellt werden muss. Zusätzlich können die Spannelemente, da sie quer zur Längsrichtung der Zuganker verlaufen, günstig zugänglich angeordnet werden. Die Spannelemente als solche können dabei vorteilhafterweise entsprechend aus dem Möbelbau bekannten Spannmittel ausgebildet sein (vergleiche GB 2277973 A; DE 9421912 U1).

Ferner ist denkbar, dass der Hohlkörper an seiner Mantelfläche im Bereich seiner freien Enden Gewinde bzw. eine um die Mittellängsachse des Hohlkörpers verdrehbar angeordnete Überwurfmuttern vorsieht und dass die Gelenkabschnitte im Bereich der Flanschabschnitte um die Mittellängsachse des jeweiligen Flanschabschnitts verdrehbar angeordnete Überwurfmuttern bzw. Gewinde für hohlkörperseitige derart vorgesehen sind, dass der Hohlkörper durch Verdrehen der jeweiligen Überwurfmutter am zugehörigen Flanschabschnitt durch Verspannen gegen den Flanschabschnitt anordenbar ist. Hierdurch kann durch betätigen lediglich eines Elements, nämlich der Überwurfmutter, eine funktionssichere Anordnung des Hohlelements am Gelenk bereitgestellt werden. Dabei können die Überwurfmuttern insbesondere zwischen axial zueinander beabstandeten Anschlägen in axialer Richtung gefangen angeordnet sind.

Die eingangs genannte Aufgabe wird auch durch ein System gelöst, dass mehrere erfindungsgemäße Gelenk-Glied-Einheiten aufweist, wobei zwischen jeweils zwei Gelenken ein Glied, bzw. Hohlkörper, angeordnet und/oder zwei Gelenke unmittelbar aneinander angeordnet sind. Ein solches System kann baukastenartig ausgebildet sein und die einzelnen Komponenten, nämlich Gelenke und Glieder, können in weitgehend beliebiger Reihenfolge, in Abhängigkeit von der gestellten Greifaufgabe, angeordnet werden.

Weitere Einzelheiten und vorteilhafte Ausgestaltungen der Erfindung sind der nachfolgenden Beschreibung zu entnehmen, anhand derer die in den Figuren dargestellten Ausführungsformen der Erfindung näher beschrieben und erläutert sind.

Es zeigen:
- Figur 1: eine erste erfindungsgemäße Gelenk-Glied-Einheit im demontierten Zustand,
- Figur 2: ein System umfassend zwei erfindungsgemäße Gelenk-Glied-Einheiten gem. Figur 1 und ein weiteres Glied,
- Figur 3: zwei Gelenk-Glied-Einheiten gem. Figur 1,
- Figur 4: ein System umfassend eine zweite Ausführungsform erfindungsgemäßer Gelenk-Glied-Einheiten,
- Figur 5: eine Ausschnitt einer Seitenansicht des Systems gem. Figur 4, und
- Figur 6: ein System umfassend eine dritte Ausführungsform erfindungsgemäßer Gelenk-Glied-Einheiten.

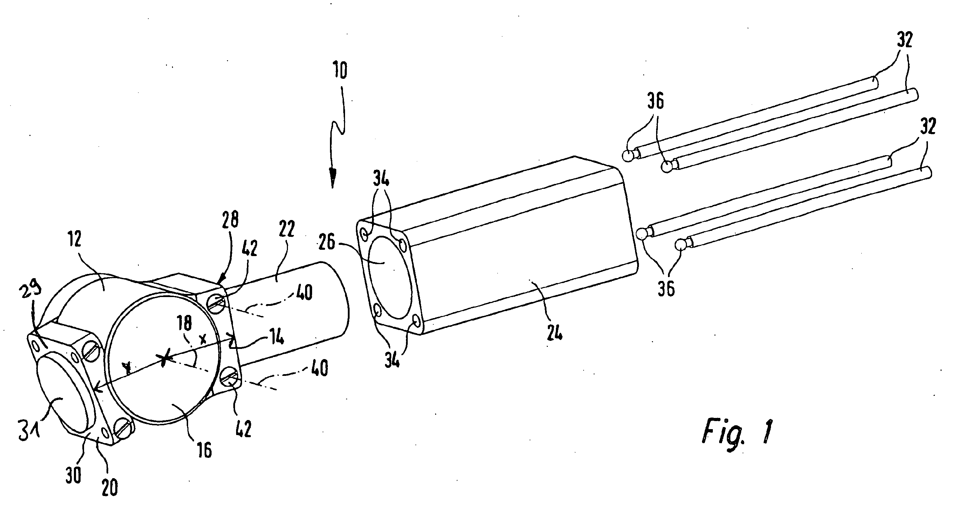

In der Figur 1 ist eine Gelenk-Glied-Einheit 10 dargestellt. Die Einheit 10 umfasst ein Gelenk 12, das einen ersten Gelenkabschnitt 14 und einen mit dem ersten Gelenkabschnitt über ein Getriebe 16 verbundenen, um eine Schwenkachse 18 verschwenkbaren zweiten Gelenkabschnitt 20 umfasst. Am ersten Gelenkabschnitt 14 ist ein senkrecht zur Schwenkachse 18 angeordneter Motor 22 angebracht. Der Motor 22 ist dabei mit dem Getriebe 16 in der Art gekoppelt, dass bei sich drehendem Motor 22 die beiden Gelenkabschnitte 14, 20 um die Schwenkachse 18 aufeinander zu oder voneinander weg verschwenkt werden.

Die Einheit 10 umfasst außerdem ein hohlprofilartiges, als Hohlkörper 24 ausgebildetes Glied. Der Hohlkörper 24 weist in seinem zentralen Bereich einen sich in Längsrichtung des Hohlkörpers 24, durch den Hohlkörper 24 hindurch erstreckenden Hohlraum 26 auf. Zur Montage des Gelenks 12 mit dem Hohlkörper 24 wird der Hohlkörper 24 in dessen Längsrichtung so am Gelenkabschnitt 14 montiert, dass der Motor 22 im Hohlraum 26 untergebracht .ist.

Der Gelenkabschnitt 14 sieht dazu einen den Motor 22 in radialer Richtung überragenden Flanschabschnitt 28 mit einer senkrecht zur Mittellängsachse des Gelenkabschnitts verlaufenden Anlagefläche 29 vor, an der im montierten Zustand die Stirnseite des Hohlkörpers 24, insbesondere unter Zwischenschaltung eines Dichtringes, vollständig dichtend anliegt.

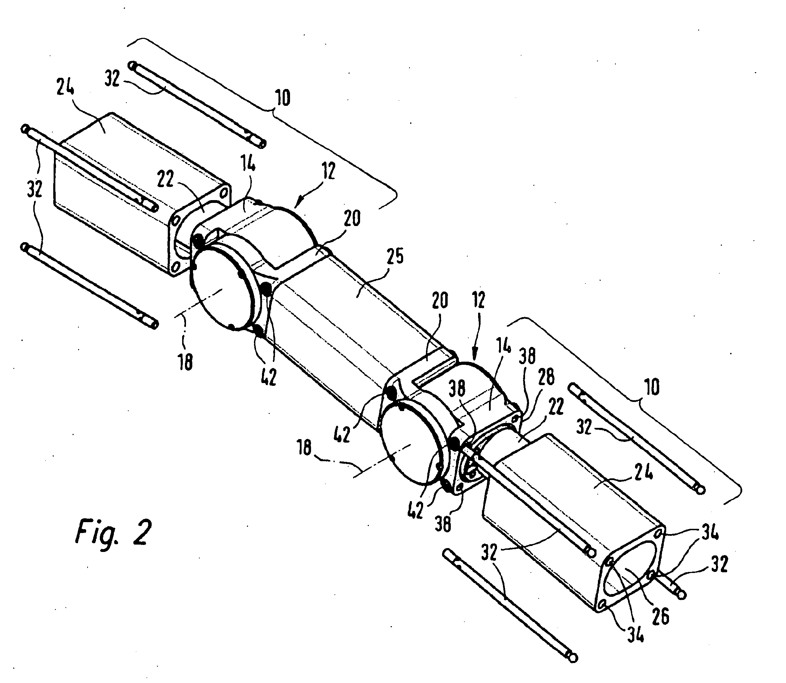

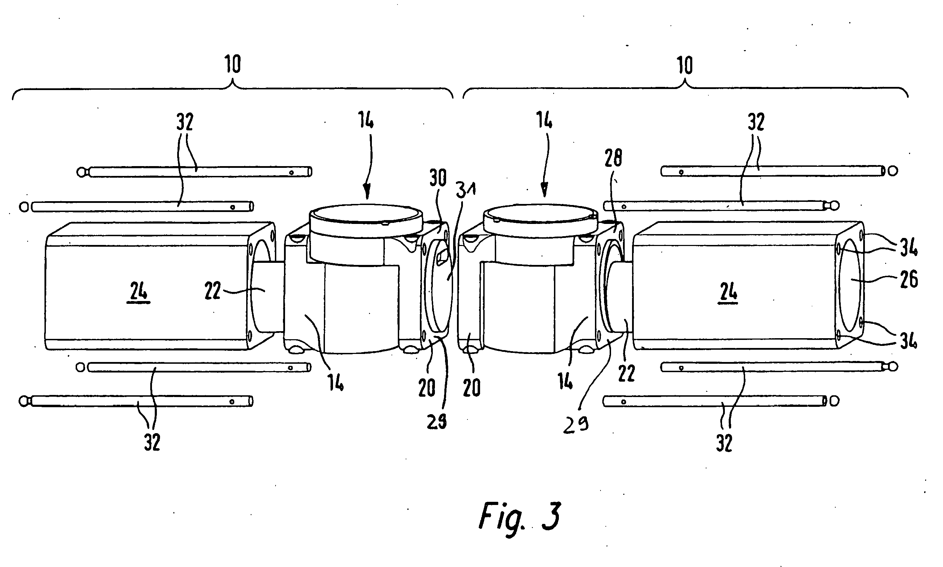

Auch der zweite Gelenkabschnitt 20 weist auf der der Schwenkachse 18 abgewandten Seite einen Flanschabschnitt 30 mit einer Anlagefläche 29 auf, der zur Anordnung eines weiteren Bauelements vorgesehen ist. Als weiteres Bauelement kommt insbesondere, wie in Figur 2 dargestellt ist, ein weiterer, dem Hohlkörper 24 entsprechender Hohlkörper 25 in Betracht. Andererseits kann als weiteres Bauelement, wie in Figur 3 dargestellt ist, ein Gelenkabschnitt 20 eines zweiten Gelenks 14 in Betracht kommen. Andere Bauelemente, wie beispielsweise Grundkörper oder Endkörper, können genauso Verwendung finden.

Wie insbesondere aus Figur 1 deutlich wird, ist der Abstand x der Anlagefläche 28 des ersten Gelenkabschnitts 20 zur Schwenkachse 18 gleich wie der Abstand y der Anlagefläche 29 des zweiten Gelenkabschnitts 14 zur Schwenkachse 18. Zudem ist am Gelenkabschnitt 20 ein die Anlagefläche 29 in axialer Richtung überstehenden gelenkabschnittseitigen zylindrischer Bereich 31 vorgesehen.

Zur Befestigung des Hohlkörpers 24 am Gelenkabschnitt 14 sind in der Figur 1 vier Zuganker 32 dargestellt. Der Hohlkörper 24 weist insgesamt vier parallel zu seiner Mittellängsachse verlaufende, vollständig im Hohlkörper 24 vorgesehene Zugankeraufnahmen 34 auf. Im montierten Zustand durchgreifen die Zuganker 32 die Zugankeraufnahmen 34 derart, dass an den Zugankern 32 vorgesehene Spannköpfe 36 im am Gelenkabschnitt 14 vorgesehene Spannaufnahmen 38 eingreifen. Die Spannköpfe 36 wirken im montierten Zustand mit am Gelenkabschnitt 14 um eine quer zur Längsachse der Zuganker 32 verlaufende Drehachse 40 verdrehbar angeordneten Spannelementen 42 zusammen. Die Spannelemente 42 weisen in ihrer Mantelfläche die Spannköpfe 36 hintergreifende Spannkopfaufnahmen mit Führungsschrägen derart auf, dass beim Verdrehen der Spannelemente 42 um die zugehörige Achse 40 die Spannköpfe 36 in axialer Richtung in die Spannaufnahmen 38 hineingezogen und fixiert werden. Zum Verdrehen der Spannelemente 42 weisen diese Schlitze auf für einen Schraubendreher.

Die der Spannköpfe 36 abgewandten freien Enden der Zuganker 32 können dabei entweder gegen die dem Gelenk 12 abgewandte Stirnseite des Hohlkörpers 24 wirken oder an einem an der dem Gelenk 12 abgewandten Seite des Hohlkörpers 24 anzuordnenden Bauelement verankert sein. Ein derartiges Bauelement kann, wie bereits ausgeführt, insbesondere ein weiteres, dem Gelenk 12 entsprechend aufgebautes Gelenk 12 sein.

Zur Stromversorgung und Ansteuerung des Motors 22 kann im Hohlraum 26 ein in den Figuren nicht dargestelltes elektrisches Kabel angeordnet sein. Ferner können innerhalb des Gelenks 12 Leitungen vorgesehen sein, die vom einen Gelenkabschnitt 14 zum anderen Gelenkabschnitt 20 führen, um insbesondere einen Motor eines weiteren Gelenks mit Strom zu versorgen.

In der Figur 2 sind nun zwei Einheiten 10 gemäß Figur 1 dargestellt, wobei die beiden Gelenke 12, bzw. deren dem jeweiligen Motor 22 nicht aufweisende Gelenkabschnitte 20 über ein den Hohlkörpern 24 entsprechenden Hohlkörper 25 miteinander verbunden sind. Zur Befestigung der beiden Gelenke 12 am Hohlkörper 25 finden insbesondere Zuganker 32 Verwendung, wie sie in der Figur 1 näher beschrieben sind. An den einander abgewandten freien Enden der Hohlkörper 24 können erfindungsgemäß weitere Bauelemente, beispielsweise weitere Gelenke 12, angeordnet sein.

Andererseits kann, wie in Figur 3 dargestellt ist, vorgesehen sein, dass zwei Gelenke 12, bzw. die jeweiligen Gelenkabschnitte 20, die den Motor 22 nicht aufweisen, ohne Zwischenschaltung des Hohlkörpers 25 unmittelbar aneinander angeordnet sind.

Wie aus Figur 2 und 3 deutlich wird, sind die Mittellängsachsen der Hohlkörper 24, 25 in der 180°-Lage der Gelenke 12 entlang einer Linie angeordnet.

Besonders vorteilhaft ist, dass sämtliche Flanschabschnitte 20,28 einander entsprechend ausgebildet sind, so dass eine weitgehend beliebige Kombination der Anordnung von Gelenken 12 und den zugehörigen Hohlkörpern 24, 25 erfolgen kann. Insgesamt ergibt sich ein sehr flexibles und anpassungsfähiges Baukastensystem für insbesondere Roboterfinger oder Roboterarme.

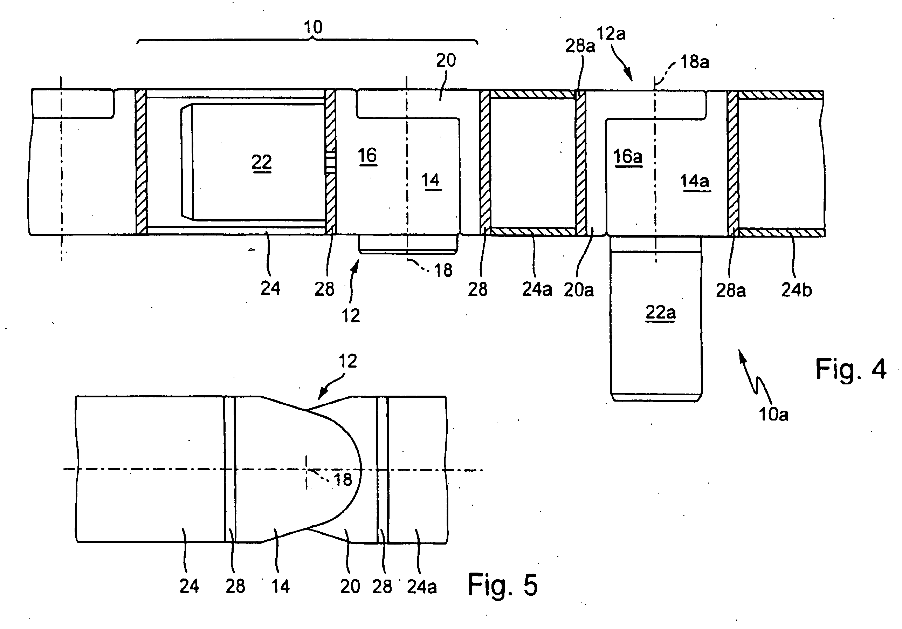

Die in den Figuren 4 und 5 dargestellte zweite Ausführungsform der Erfindung zeigt eine Gelenk-Glied-Einheit mit zwei um die Achse 18 verschwenkbare Gelenkabschnitten 14 und 20. Der Ausführungsform in den Figuren 1 bis 3 entsprechende Bauteile sind mit entsprechenden Bezugszahlen gekennzeichnet. Deutlich zu erkennen ist, dass der Motor 22 innerhalb des Hohlkörpers 24, und zwar beabstandet zur Innenwand des Hohlkörpers 24 im Hohlkörper 24 angeordnet ist. Am Flanschabschnitt 28 des Gelenkabschnitts 20 ist ein Hohlkörper 24a angeordnet, der in Axialrichtung kürzer ausgebildet ist als der Hohlkörper 24, der am Flanschabschnitt 28 des Gelenkabschnitts 14 angebracht ist. Der Hohlkörper 24a ist mit seiner dem Flanschabschnitt 28 abgewandten Stirnseite an einem Flanschabschnitt 28 eines Gelenkabschnitts 20a eines Gliedes 12a angeordnet. Am Gelenkabschnitt 14a dieses Gliedes 12a ist ein Flanschabschnitt 28a vorgesehen, an dem ein Hohlkörper 24b befestigt ist. Als Antrieb zum Verschwenken des Gelenks 12a ist ein Motor 22a vorgesehen, der am Gelenkabschnitt 14a des Gelenks 12a angeflanscht ist. Der Motor 22a ist dabei nicht innerhalb des Hohlkörpers 24b angeordnet, sondern in Richtung der Schwenkachse 18a.

Wie aus den Figuren 4 und 5 deutlich wird, schließen die Flanschabschnitte 28 und 28a bündig mit der Außenkontur der Hohlprofile 24, 24a und 24b ab.

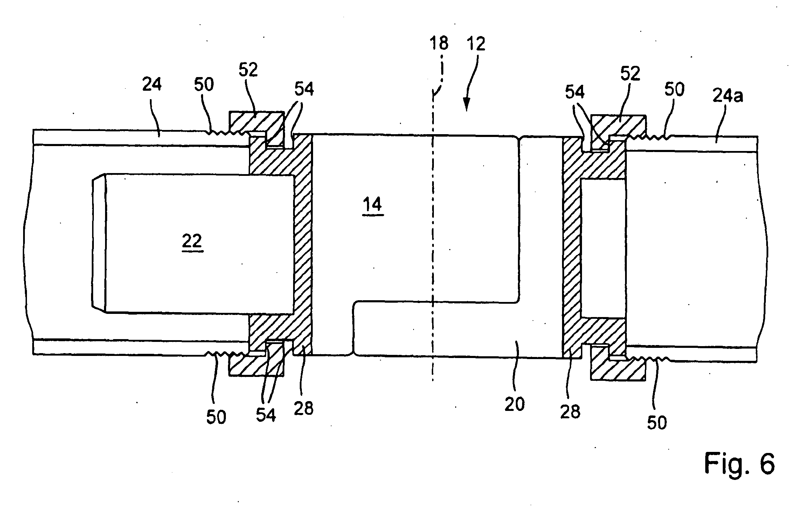

Das in der Figur 6 gezeigte erfindungsgemäße System unterscheidet sich von den Systemen gemäß Figur 1 bis 3 und 4,5 dadurch, dass die Hohlkörper 24 und 24a an ihren freien Stirnseiten im Bereich der Außenoberflächen umlaufende Gewinde 50 vorsehen. An den Flanschabschnitten 28 und 28a sind mit den Gewinden 50 zusammenwirkende Überwurfmuttern 52 angebracht. Die Überwurfmuttern 52 sind dabei zwischen sich in radialer Richtung erstreckenden, flanschabschnittseitigen Anschlägen 54 in axialer Richtung gefangen angeordnet. Durch Vertrehen der Überwurfmuttern 52 in die entsprechende Richtung wird folglich der jeweils zugehörige Hohlkörper 24, 24a gegen die ihm zugewandte Stirnseite des Flanschabschnitts 28 verspannt. Aufgrund der auf den Flanschabschnitten 28 drehbar angeordneten Überwurfmuttern 52 können die Hohlkörper 24 und 24a auf einfache Art und Weise am Gelenk 12 montiert werden.

## Patentansprüche

1. Motorantreibbare Gelenk-Glied-Einheit (10, 10a) für Roboterfinger oder Roboterarme, mit einem Gelenk (12, 12a), das einen ersten Gelenkabschnitt (14, 14a) und einen mit dem ersten Gelenkabschnitt (14, 14a) über ein Getriebe (16, 16a) bewegungsgekoppelten, um eine Schwenkachse (18, 18a) verschwenkbaren zweiten Gelenkabschnitt (20,10a) aufweist, mit einem am Gelenk (12, 12a) angeordneten, als wenigstens einseitig offener Hohlkörper (24, 25, 24a,24b) ausgebildeten Glied (24,25) und mit einem Motor (22, 22a) zum Antreiben des Getriebes (16, 16a) und zum Verschwenken des Glieds (24, 25) um die Schwenkachse (18), wobei das Glied (24, 25; 24a, 24b) derart hohl ausgebildet ist, dass der Motor (22, 22a) innerhalb des Hohlkörpers (24, 25; 24a,24b) unterbringbar ist, **dadurch gekennzeichnet, dass** das Glied (24, 25; 24a,24b) wenigstens weitgehend gleich ausgestaltete Stirnseiten aufweist und dass der erste Gelenkabschnitt (14, 14a) auf der der Schwenkachse (18,18a) abgewandten seite einen bei am Gelenk (12, 12a) angebrachten Motor (22, 22a) den Motor (22, 22a) in radialer Richtung überragenden Flanschabschnitts (28, 28a) zur Anordnung des Hohlkörpers (24, 24a) derart aufweist, dass der Hohlkörper mit einer freien Stirnseite auf den Flanschabschnitt aufsetzbar ist, wobei die Ausbildung des Flanschabschnitts (28, 28a) des zweiten Gelenkabschnitts (20, 20a) der Ausbildung des Flanschabschnitts (28, 28a) des ersten Gelenkabschnitts (14, 14a) zumindest derart entspricht, dass der Hohlkörper (24, 24a), oder einer diesem Hohlkörper (24, 24a) entsprechender weiterer Hohlkörper, mit wahlweise einer seiner Stirnseiten auf den Flanschabschnitt (28, 28a) des zweiten Gelenkabschnitts (20, 20a) aufsetzbar ist.

2. Einheit (10) nach Anspruch 1, **dadurch gekennzeichnet, dass** die Flanschabschnitte (28) der beiden Gelenkabschnitte (14, 20) jeweils eine senkrecht zur Mittellängsachse verlaufende Anlagefläche (29) zur Anlage der Stirnseite des Hohlkörpers aufweisen.

3. Einheit (10) nach Anspruch 2, **dadurch gekennzeichnet, dass** die Anlagefläche (29) wenigstens eines Gelenkabschnitts (14, 20) einen in axialer Richtung überstehenden gelenkabschnittseitigen Bereich (31) begrenzt.

4. Einheit (10) nach Anspruch 3, **dadurch gekennzeichnet, dass** der überstehende, gelenkabschnittseitigen Bereich (31) zylindrisch und insbesondere kreiszylindrisch ausgebildet ist.

5. Einheit (10) nach Anspruch 2, 3 oder 4, **dadurch gekennzeichnet, dass** der Abstand (x) der Anlagefläche des ersten Gelenkabschnitts (20) zur Schwenkachse (18) gleich ist wie der Abstand (y) der Anlagefläche des zweiten Gelenkabschnitts (14) zur Schwenkachse (18).

6. Einheit (10) nach wenigstens einem der vorhergehenden Ansprüche, **dadurch gekennzeichnet, dass** der Hohlkörper (24,25) als Hohlprofil mit einem über seine Länge wenigstens weitgehend gleichbleibenden Querschnitt ausgebildet ist.

7. Einheit (10) nach wenigstens einem der vorhergehenden Ansprüche, **dadurch gekennzeichnet, dass** die Flanschabschnitte in radialer Richtung bündig mit dem Hohlkörper abschließen.

8. Einheit (10) nach wenigstens einem der vorhergehenden Ansprüche, **dadurch gekennzeichnet, dass** im Hohlkörper (24,25) elektrische Verbindungsmittel zur elektrischen Versorgung und/oder Ansteuerung des Motors (22) geführt sind.

9. Einheit (10) nach wenigstens einem der vorhergehenden Ansprüche, **dadurch gekennzeichnet, dass** der Hohlkörper (24,25) sich in Längsrichtung erstreckende Zugankeraufnahmen (34) für den Hohlkörper (24,25) gegen den Gelenkabschnitt (14,20) beaufschlagende Zuganker (32) aufweist.

10. Einheit (10) nach Anspruch 9, **dadurch gekennzeichnet, dass** sich die Zugankeraufnahmen (34) über die gesamte Länge des Hohlkörpers (24,25) erstrecken, wobei im montierten Zustand die Zuganker (32) zum einen den ersten Gelenkabschnitt (14) gegen die dem Gelenk (12) zugewandte Stirnseite des Hohlkörpers (24,25) und zum anderen ein weiteres Bauelement, insbesondere ein Gelenkabschnitt einer weiteren Gelenk-Glied-Einheit nach wenigstens einem der vorhergehenden Ansprüche, gegen die andere Stirnseite des Hohlkörpers (24,25) beaufschlagen.

11. Einheit (10) nach Anspruch 10, **dadurch gekennzeichnet, dass** die freien Enden der Zuganker (32) am ersten Gelenkabschnitt (14) oder am weiteren Bauelement verankert sind und über am weiteren Bauelement oder am Gelenkabschnitt (14) vorgesehene Spannmittel (42) in Längsrichtung vorspannbar sind.

12. Einheit (10) nach Anspruch 11, **dadurch gekennzeichnet, dass** die Spannmittel am weiteren Bauelement oder am Gelenkabschnitt (14) um eine quer zur Längsachse der Zuganker (32) verlaufende Drehachse verdrehbar angeordnete Spannelemente (42) umfassen, die an den Zugankern (32) vorgesehene Spannköpfe (36) derart hintergreifen, dass beim Verdrehen der Spannelemente (42) die Zuganker (32) über spannelementseitige Führungsschrägen in Längsrichtung gespannt werden.

13. Einheit (10) nach wenigstens einem der vorhergehenden Ansprüche, **dadurch gekennzeichnet, dass** der Hohlkörper (24, 24a) an seiner Mantelfläche im Bereich seiner freien Enden Gewinde (50) bzw. eine um die Mittellängsachse des Hohlkörpers (24, 24a) verdrehbar angeordnete Überwurfmuttern vorsieht und dass die Gelenkabschnitte im Bereich der Flanschabschnitte (28) um die Mittellängsachse des jeweiligen Flanschabschnitts (28) verdrehbar angeordnete Überwurfmuttern (52) bzw. Gewinde für hohlkörperseitige Überwurfmuttern derart vorgesehen sind, dass der Hohlkörper durch Verdrehen der jeweiligen Überwurfmutter (52) am zugehörigen Flanschabschnitt (28) durch Verspannen gegen den Flanschabschnitt (28) anordenbar ist.

14. Einheit (10) nach Anspruch 13, **dadurch gekennzeichnet, dass** die Überwurfmuttern (52) zwischen flanschabschnittseitigen Anschlägen (54) in axialer Richtung gefangen angeordnet sind.

15. System umfassend mehrere Gelenk-Glied-Einheiten (10) nach wenigstens einem der vorhergehenden Ansprüche, wobei zwischen jeweils zwei Gelenken (14) ein Glied (24,25) angeordnet ist.

## Claims

1. A joint-link unit (10, 10a), which can be motor-driven, for robotic fingers or robotic arms, having a joint (12, 12a) with a first joint section (14, 14a) and a second joint section (20, 10a), which is movably coupled with the first joint section (14, 14a) via a gear (16, 16a) and is pivotable around a pivot shaft (18, 18a), and having a link (24, 25) which is arranged on the joint (12, 12a) and is embodied as a hollow body (24, 25, 24a, 24b) open on at least one side, and with a motor (22, 22a) for driving the gear (16, 16a) and for pivoting the link (24, 25) around the pivot shaft (18), wherein the link (24, 25, 24a, 24b) is embodied to be hollow in such a way that the motor (22, 22a) can be housed inside the hollow body (24, 25, 24a, 24b), **characterized in that** the first link (24, 25, 24a, 24b) has front faces which are embodied to be at least uniform, and that on the side facing away from the pivot shaft (18, 18a) the first joint section (14, 14a) has a flange section (28, 28a) which, when the motor (22, 22a) is attached to the joint (12, 12a), extends over the motor (22, 22a) in the radial direction for arranging the hollow body (24, 24a) in such a way that the hollow body can be placed with its free front side on the flange section, wherein the embodiment of the flange section (28, 28a) of the second joint section (20, 20a) corresponds to the embodiment of the flange section (28, 28a) of the first joint section (14, 14a) at least to the extent that the hollow body (24, 24a), or a further hollow body corresponding to this hollow body (24, 24a), can be selectively placed with one of its front faces on the flange section (28, 28a) of the second joint section (20, 20a).

2. The unit (10) in accordance with claim 1, **characterized in that** the flange sections (28) of the two joint sections (14, 20) each have a contact face (29) extending perpendicularly in relation to the center longitudinal axis for contact with the front face of the hollow body.

3. The unit (10) in accordance with claim 2, **characterized in that** the contact face (29) of at least one joint section (14, 20) has a joint section area (31) protruding in the axial direction.

4. The unit (10) in accordance with claim 3, **characterized in that** the protruding joint section area (31) is embodied to be cylindrical, and in particular circular-cylindrical.

5. The unit (10) in accordance with claim 2, 3 or 4, **characterized in that** the spacing (x) of the contact face of the first joint section (20) from the pivot shaft (18) is equal to the spacing (y) of the contact face of the second joint section (14) from the pivot shaft (18).

6. The unit (10) in accordance with at least one of the previous claims, **characterized in that** the hollow body (24, 25) is embodied as a hollow profile with a cross section which remains the same to at least a large extent over its length.

7. The unit (10) in accordance with at least one of the previous claims, **characterized in that** in the radial direction the flange sections terminate flush with the hollow body.

8. The unit (10) in accordance with at least one of the previous claims, **characterized in that** electrical connecting means for the electrical power supply and/or for triggering the motor (22) are conducted inside the hollow body (24, 25).

9. The unit (10) in accordance with at least one of the preceding claims, **characterized in that** the hollow body (24, 25) has tie rod receptacles (34) extending in the longitudinal direction for tie rods (32) which urge the hollow body (24, 25) in the direction toward the joint section (14, 20).

10. The unit (10) in accordance with claim 9, **characterized in that** the tie rod receptacles (34) extend over the entire length of the hollow body (24, 25) while, for one, in the mounted state, the tie rods (32) urge the joint section (14) in the direction toward the front face of the hollow body (24, 25) facing the joint (12), and furthermore urge a further component, in particular a joint section of a further joint-link unit in accordance with at least one of the preceding claims, in the direction toward the other front face of the hollow body (24, 25).

11. The unit (10) in accordance with claim 10, **characterized in that** the free ends of the tie rods (32) are attached to the first joint section (14) or to the further component and can be pre-stressed in the longitudinal direction by clamping means (42) provided on the further component or on the joint section (14).

12. The unit (10) in accordance with claim 11, **characterized in that** the clamping means provided on the further component or on the joint section (14) comprise clamping elements (42), which are arranged to be pivotable around a pivot axis extending transversely in respect to the longitudinal axis of the tie rods (32), and extend behind clamping heads (36) provided on the tie rods (32) in such a way that, when the clamping elements (42) are rotated, the tie rods (32) are clamped in the longitudinal direction by means of oblique guide devices on the side of the clamping elements.

13. The unit (10) in accordance with at least one of the preceding claims, **characterized in that**, the hollow body (24, 24a) is provided on its shell face in the area of its free ends with screw threads (50), or respectively with union nuts, which are rotatably arranged around the center longitudinal axis, and that union nuts (52), or respectively screw threads, which are rotatably arranged around the center longitudinal axis, are provided in the joint sections (50) in the area of the flange sections (28) in such a way that, by rotating the respective union nut (52), the hollow body can be arranged on the associated flange section (28) by clamping it against the flange section (28).

14. The unit (10) in accordance with claim 13, **characterized in that** the union nuts (52) are arranged captive in the axial direction between detents (54) on the sides of the flange sections.

15. A system comprising a plurality of joint-link units (10) in accordance with at least one of the preceding claims, in which a link (24, 25) is arranged between respectively two joints (14).

## Revendications

1. Unité à éléments articulés (10, 10a) pouvant être commandée par moteur pour des doigts ou des bras de robot, comportant une articulation (12, 12a) qui présente une première section articulée (14, 14a) et une deuxième section articulée (20a) pouvant pivoter autour d'un axe de pivotement (18, 18a) et étant couplée en mouvement avec la première section articulée (14, 14a) par le biais d'un organe de transmission (16, 16a), comportant un élément (24, 25) réalisé sous la forme d'un corps creux (24, 25, 24a, 24b) ouvert au moins sur un côté et agencé sur l'articulation (12, 12a), et comportant un moteur (22, 22a) pour entraîner l'organe de transmission (16, 16a) ainsi que pour faire pivoter l'élément (24, 25) autour de l'axe de pivotement (18), l'élément (24, 25 ; 24a, 24b) étant réalisé creux de façon à ce que le moteur (22, 22a) puisse être introduit à l'intérieur du corps creux (24, 25 ; 24a, 24b), **caractérisée en ce que** l'élément (24, 25 ; 24a, 24b) présente des faces réalisées au moins en grande partie identiques et **en ce que** la première section articulée (14, 14a) sur le côté orienté à l'opposé de l'axe de pivotement (18, 18a) présente, dans le cas d'un moteur (22, 22a) monté sur l'articulation (12, 12a), des sections à brides (28, 28a) en saillie dans le sens radial par rapport au moteur (22, 22a) pour l'agencement du corps creux (24, 24a), de telle sorte que le corps creux peut être monté sur la section à brides avec une face libre, la forme de la section à brides (28, 28a) de la deuxième section articulée (20, 20a) correspondant à la forme de la section à brides (28, 28a) de la première section articulée (14, 14a) au moins de telle sorte que le corps creux (24, 24a), ou un autre corps creux correspondant à ce corps creux (24, 24a), peut être monté sur la section à brides (28, 28a) de la deuxième section articulée (20, 20a) avec au choix l'une de ses faces.

2. Unité (10) selon la revendication 1, **caractérisée en ce que** les sections à brides (28) des deux sections articulées (14, 20) présentent chacune une surface d'appui (29) s'étendant perpendiculairement à l'axe longitudinal médian pour pouvoir recevoir la face du corps creux.

3. Unité (10) selon la revendication 2, **caractérisée en ce que** la face d'appui (29) d'au moins une section articulée (14, 20) délimite une zone (31) côté section articulée en saillie dans le sens axial.

4. Unité (10) selon la revendication 3, **caractérisée en ce que** la zone (31) en saillie côté section articulée est réalisée cylindrique et en particulier cylindrique circulaire.

5. Unité (10) selon la revendication 2, 3 ou 4, **caractérisée en ce que** la distance (x) entre la surface d'appui de la première section articulée (20) et l'axe de pivotement (18) est identique à la distance (y) entre la surface d'appui de la deuxième section articulée (14) et l'axe de pivotement (18).

6. Unité (10) selon au moins l'une des revendications précédentes, **caractérisée en ce que** le corps creux (24, 25) est réalisé sous la forme d'un profil creux présentant une coupe transversale restant au moins en grande partie identique sur toute sa longueur.

7. Unité (10) selon au moins l'une des revendications précédentes, **caractérisée en ce que** les sections à brides forment avec le corps creux une surface plane dans le sens radial.

8. Unité (10) selon au moins l'une des revendications précédentes, **caractérisée en ce qu'**il est prévu dans le corps creux (24, 25) des moyens de raccordement électriques pour l'alimentation et/ou la commande électrique du moteur (22).

9. Unité (10) selon au moins l'une des revendications précédentes, **caractérisée en ce que** le corps creux (24, 25) présente des logements de tirant (34) s'étendant dans le sens longitudinal destinés aux tirants (32) appliquant le corps creux (24, 25) contre la section articulée (14, 20).

10. Unité (10) selon la revendication 9, **caractérisée en ce que** les logements de tirant (34) s'étendent sur toute la longueur du corps creux (24, 25), à l'état monté, les tirants (32) appliquant d'une part la première section articulée (14) contre la face orientée vers l'articulation (12) du corps creux (24, 25) et d'autre part un autre élément de construction, en particulier une section articulée d'une autre unité à éléments articulés selon au moins l'une des revendications précédentes, contre l'autre face du corps creux (24, 25).

11. Unité (10) selon la revendication 10, **caractérisée en ce que** les extrémités libres des tirants (32) sont ancrées sur la première section articulée (14) ou sur un autre élément de construction et peuvent être précontraintes dans le sens de la longueur par le biais de moyens de serrage (42) prévus au niveau de l'autre élément de construction ou au niveau de la section articulée (14).

12. Unité (10) selon la revendication 11, **caractérisée en ce que** les moyens de serrage sur l'autre élément de construction ou sur la section articulée (14) comprennent des éléments de serrage (42) agencés de façon à pouvoir tourner autour d'un axe de rotation s'étendant perpendiculairement à l'axe longitudinal des tirants (32), lesquels éléments de serrage viennent en prise dans les têtes de serrage (36) prévues sur les tirants (32) de telle sorte que, lorsque l'on tourne les éléments de serrage (42), les tirants (32) sont serrés dans le sens longitudinal par l'intermédiaire de chanfreins de guidage côté élément de serrage.

13. Unité (10) selon au moins l'une des revendications précédentes, **caractérisée en ce que** le corps creux (24, 24a) est muni, sur sa surface d'enveloppe dans la zone de ses extrémités libres, de filetages (50) en particulier un filetage pour les écrous raccord agencés de manière à pouvoir tourner autour de l'axe longitudinal médian du corps creux (24, 24a) et **en ce que** les sections articulées dans la zone des sections à brides (28) sont munies d'écrous raccord (52) agencés de manière à pouvoir tourner autour de l'axe longitudinal médian de chacune des sections à brides (28) et de filetages pour les écrous raccord côté corps creux, **en ce que** le corps creux, de par la rotation de chaque écrou raccord (52) au niveau de la section à brides correspondante (28), peut être agencé contre la section à brides (28) par serrage.

14. Unité (10) selon la revendication 13, **caractérisée en ce que** les écrous raccord (52) sont agencés entre les butées (54) côté section à brides dans le sens axial.

15. Système comprenant plusieurs unités à éléments articulés (10) selon au moins l'une des revendications précédentes, dans lequel un élément (24, 25) est agencé entre deux articulations (14).
